# FASCICULE DE BREVET EUROPEEN

(11) **EP 1 788 273 B1**
(45) Date de publication et mention de la délivrance du brevet: **17.09.2008**
(21) Numéro de dépôt: 05447258.4
(22) Date de dépôt: 21.11.2005
(51) Int. Cl.: F16F 7/12

(54) **Structures macro-cellulaires pour l'absorption d'énergie et procédé de fabrication de telles structures**
Makrozellenstruktur zur Energieabsorption und Herstellverfahren für eine solche Struktur
Macro cell structure for energy absorption and method of manufacturing of such a structure

(43) Date de publication de la demande: 23.05.2007
(73) Titulaire: ArcelorMittal France, 93200 Saint-Denis (FR)
(72) Inventeur: Sener, Jean-Yves, 4031 Angleur (BE)
(74) Mandataire: Lerho, Marc J. A.

(56) Documents cités:
- WO-A-99/39939
- DE-A1- 2 158 086
- US-A- 3 624 764
- US-A- 5 747 140
- US-B1- 6 199 942

## Description

### Objet de l'invention

La présente invention se rapporte à la réalisation de mousses macro-cellulaires et à l'utilisation de celles-ci sous forme de structures absorbant l'énergie par déformation plastique.

L'invention concerne également le procédé de fabrication de telles structures.

### Arrière-plan technologique et état de la technique

Il est connu que le concept d'absorption d'énergie est utilisé dans de nombreux domaines et notamment dans le « crash » automobile, la protection contre l'explosion, la protection de structures, la protection des personnes, etc.

Il existe plusieurs grandes catégories dans les solutions de structures permettant d'absorber l'énergie :
- celles travaillant par perte de charge de fluide ;
- celles travaillant par frottement de matériaux ;
- celles travaillant par effet d'inertie ;
- celles travaillant par déformation.

Dans la dernière catégorie, l'énergie est absorbée par déformation de la matière. Cette déformation peut être élastique, c'est-à-dire avec remise en place lors du déchargement, ou plastique, les déformations restant inchangées lors du déchargement.

Ces déformations sont obtenues par extension, compression ou flexion de la matière. Elles peuvent également être obtenues par pliage local du matériau utilisé.

On connaît les structures en nid d'abeille comme celles décrites par exemple dans les brevets US-A-6,472,043, GB-A-2 323 146, FR-A-2 251 773, US-A-4,352,484, US-A-6,472,043. Tous ces documents, qui portent également sur le procédé de fabrication de telles structures, sont basés sur une structure en nid d'abeille améliorée, c'est-à-dire qui présente une formation de trous ou de rainures pour empêcher l'apparition d'un pic de choc. Les mousses de polymères souvent incorporées dans ce type de structure présentent le désavantage d'être inflammables et de perdre leurs caractéristiques prématurément, tandis que la réalisation de trous et rainures est compliquée et coûteuse. De plus, dans les nids d'abeille collés, se présente le problème du vieillissement de l'adhésif au cours du temps.

En outre, les structures d'absorption de chocs constituées de nids d'abeille métalliques, contrairement aux structures constituées de nids d'abeille en carton ou en polymère, ne peuvent se déformer plastiquement que si on leur impose des contraintes fortes. Cela est dû au fait que la limite d'élasticité des métaux est élevée. Pour que la structure en nids d'abeille métallique soit capable de se déformer plastiquement sous des contraintes plus faibles, il est possible d'augmenter la longueur des parois du nid d'abeille. Cependant, au-delà d'une certaine longueur, pour une épaisseur de paroi donnée, des problèmes d'instabilité locale de la structure d'absorption apparaissent (flambement, voilement). Il est également possible de réduire la longueur et d'amincir les parois du nid d'abeille ; cependant ce type de structure devient difficile à fabriquer, et cela pose des problèmes de productivité.

On connaît alternativement l'utilisation de mousses métalliques qui permettent aussi une bonne absorption d'énergie. Ces mousses à l'allure d'éponges sont constituées de micro-cellules (quelques mm typiquement) qui permettent l'écrasement de la structure. L'absorption est à nouveau basée sur la déformation de la matière. L'inconvénient majeur de ces structures est leur fabrication qui, parce qu'elle est difficilement maîtrisable, ne permet pas d'obtenir une structure homogène. De plus, leur fabrication étant coûteuse, son utilisation peut difficilement être envisagée dans le domaine de la construction. Certains brevets font référence à ce type de matériau, comme par exemple la demande de brevet US-A-2005/136 282 qui décrit une structure métallique composite comprenant deux tôles métalliques reliées par une âme constituée de mousse métallique. Cette structure composite est utilisée comme matériau d'absorption d'énergie.

Par ailleurs, la demande de brevet EP-A-0 517 377 décrit une barrière absorbante de chocs pour véhicule, par déformation plastique, constituée d'une pluralité de cylindres en métal déployé, incorporés les uns à l'intérieur des autres, concentriques ou excentrés. Les différents cylindres sont solidarisés par soudage à des couvercles faisant office de bases. La structure est renforcée par un remplissage de mousse, qui évite le flambement. L'axe de chaque cylindre est perpendiculaire, soit à la grande diagonale, soit à la petite diagonale de la maille de métal déployé. Le but poursuivi est d'obtenir une gradation dans la rigidité axiale des différents cylindres de manière telle qu'une section plus en avant tende à s'écraser lors d'un choc avant les sections plus en arrière. De plus, le système comprend des raidisseurs axiaux soudés sur le cylindre le plus extérieur. Lors d'un choc, les feuilles de métal déployé gardent essentiellement une structure bi-dimensionnelle, certaines mailles 2D du métal déployé pouvant toutefois se refermer sur elles-mêmes. Un problème principal de ce type de structure réside dans la durabilité incertaine et l'inflammabilité des mousses incorporées.

La demande internationale WO-A-99/39939 divulgue un assemblage absorbeur d'énergie destiné à être monté sur un véhicule et conçu pour décélérer un objet entrant en collision avec cet assemblage. L'élément absorbant comprend une plaque de métal déployé pliée en zigzag, disposée pour que les mailles de métal déployé soient essentiellement perpendiculaires à une plaque représentant la surface d'impact, à laquelle ladite plaque est attachée. Le pliage est effectué perpendiculairement à la grande diagonale des cellules 2D de métal déployé, les plis étant également perpendiculaires à la plaque d'attache. La hauteur de la structure est de quelques mailles (1 à 5 mailles). La structure peut contenir un matériau de remplissage, comme une mousse polymère, par exemple.

L'absorption d'énergie se fait par déformation plastique, c'est-à-dire par fermeture des mailles 2D. Le désavantage réside surtout dans le caractère anisotropique de l'absorption d'énergie de la structure, et dans sa faible capacité à absorber l'énergie étant donné que la déformation maximale de la structure est limitée.

### Buts de l'invention

La présente invention vise à fournir une solution qui permette de s'affranchir des inconvénients de l'état de la technique.

L'invention a en particulier pour but de proposer un nouveau type de structure absorbant l'énergie par déformation plastique, capable de se déformer de manière importante dans les trois dimensions principales ou une combinaison de ces trois dimensions sous l'effet d'un choc sous contraintes faibles sans problème d'instabilité. Selon l'invention, on entend par contrainte faible, une contrainte inférieure à 5 MPa.

Un but encore poursuivi par l'invention est de fournir une structure à la fois légère et rigide présentant une résistance améliorée au voilement et au flambement, c'est-à-dire permettant de s'affranchir des problèmes d'instabilité.

Un but additionnel de l'invention est de fournir une structure absorbant l'énergie qui est ininflammable et qui ne vieillit pas de manière prématurée dans le temps, c'est à dire qui présente une durabilité supérieure à 5 ans.

Un but encore additionnel de l'invention est de fournir une structure essentiellement métallique à contrainte variable, c'est-à-dire qui puisse être modulée pour s'adapter tantôt à des contraintes fortes, tantôt à des contraintes beaucoup plus faibles, selon le type d'application, ou encore une structure avec force d'écrasement croissante. Selon l'invention, on entend par contrainte forte, une contrainte supérieure à 20 MPa.

### Principaux éléments caractéristiques de l'invention

La structure selon l'invention est définie selon les termes de la revendication 1. Ainsi, la structure selon l'invention comprend un agencement d'une pluralité de feuilles métalliques déformées, lesdites feuilles métalliques étant constituées d'une pluralité de brins interconnectés définissant des mailles, la matière métallique se présentant sous la forme de lanières essentiellement attachées au niveau de sommets de chaque maille, appelés noeuds. Selon l'invention, ces feuilles métalliques mises en forme et agencées réalisent un réseau régulier de macro-cellules, de dimension caractéristique de l'ordre du centimètre ou de la dizaine de centimètres, délimitées au moins partiellement par des faces. Lesdites macro-cellules sont configurées pour permettre à au moins une desdites mailles de se refermer au moins partiellement sur elle-même ou de pivoter et/ou à au moins une desdites faces de se rapprocher au moins partiellement d'une ou plusieurs autres faces, lors de ladite déformation plastique.

Ainsi, on ne retrouve pas une telle structure répétitive à trois dimensions dans l'état de la technique, en particulier dans le document WO-A-99/39939.

La structure selon l'invention convient particulièrement à la protection des personnes en cas d'accident, par exemple de voiture, d'avion ou encore en cas d'explosion. En effet, pour préserver l'intégrité physique des occupants d'un véhicule lors d'un choc, il faut absolument éviter de les soumettre à une décélération trop importante. Cela limite donc la force de retenue de la structure d'absorption de chocs mise en oeuvre. Or la contrainte admissible par la structure est inversement proportionnelle à la surface d'impact de la structure. Ainsi, si la surface d'impact est importante, la structure devra être capable de se déformer sous contraintes faibles, en revanche si la surface d'impact est faible, la structure devra imposer des contraintes élevées. Les structures d'absorption de chocs dont il est question dans la présente invention sont de grandes dimensions, et sont destinées à fabriquer par exemple (voir revendication 27) :
- des protections fixes montées aux abords des péages et des intersections de routes,
- des protections de piles de pont,
- des protections fixées sur des véhicules terrestres à moteur, tels que des camions, des véhicules d'intervention routière.
Elles doivent donc être capables de se déformer plastiquement à la fois sous contraintes fortes et sous contraintes faibles.

La structure selon l'invention présente en outre l'avantage d'être rigide et relativement isotrope.

Des formes d'exécution préférées de la présente invention sont décrites dans les revendications subsidiaires 2 à 19 et 24, 25.

Un deuxième objet de la présente invention, énoncé dans les revendications 20 à 23 et 26, concerne une méthode de fabrication convenant tout particulièrement pour la réalisation de la structure précitée.

### Brève description des figures

La figure 1 représente schématiquement un morceau de « feuille cellulaire », vue de face, avec localisation de rotules plastiques.

La figure 2 représente schématiquement une cellule ou maille de la feuille selon la figure 1.

La figure 3 représente schématiquement une macro-cellule 3D selon l'invention. Cette macro-cellule est composée de 6 faces, la longueur de chacune des faces est mesurée selon la dimension d1.

La figure 4 représente schématiquement un réseau de macro-cellules 3D.

La figure 5 représente schématiquement différentes mises en formes de feuilles de métal déployé, vues de dessus.

La figure 6 représente schématiquement les principaux paramètres de la mise en forme de deux feuilles de métal déployé assemblées, vues de dessus.

La figure 7 représente graphiquement les trois possibilités de comportement d'une structure d'absorption lors d'un écrasement.

La figure 8 montre graphiquement les résultats de deux essais sur deux structures différentes selon l'invention, la force d'écrasement étant constante pendant la durée de l'écrasement.

La figure 9 montre schématiquement l'obtention d'une force d'écrasement croissante par mise en série de différentes structures selon l'invention.

La figure 10 montre schématiquement une structure à contrainte variable.

La figure 11 représente une schématisation de plis localisés pour stabiliser la structure de métal déployé.

La figure 12 représente schématiquement une feuille de métal déployé pré-déformée pour éviter le voilement.

### Description de l'invention

### 1. Principe d'absorption

Afin de produire une structure métallique en trois dimensions, on met en forme plusieurs feuilles métalliques constituées d'une pluralité de brins interconnectés, définissant des cellules, métal déployé et on les assemble, par exemple par soudage par résistance. Les feuilles métalliques sont choisies parmi les feuilles de métal déployé, les feuilles perforées, et les feuilles sous forme de treillis ou de grille. L'invention décrite ci-après est basée sur la reconstitution de mousse métallique à partir de produits plats (« feuilles »). Dans la suite de la description, les cellules fermées à deux dimensions constituant la feuille métalllique seront appelées « mailles ». Les cellules à trois dimensions réalisant la structure selon l'invention seront appelées « macro-cellules », ce terme provenant du fait que la taille de ces cellules 3D est relativement importante, typiquement de l'ordre du centimètre ou de la dizaine de centimètres, de préférence comprise entre 0,5 et 15 cm et avantageusement comprise entre 1 et 10 cm.

En effet, en dessous d'une taille de macro-cellule de 0,5 mm, le pliage des feuilles métalliques devient difficile et coûteux, et l'assemblage, par exemple par soudage, est malaisé. A l'opposé, au-dessus d'une taille de 15 cm, les problèmes d'instabilité de la structure (voilement) apparaissent.

Dans un mode de réalisation préféré de l'invention, on réalise la structure d'absorption en utilisant un assemblage de feuilles de métal déployé qui sont mises en forme et assemblées pour former un réseau de macro-cellules. La feuille de métal déployé est un produit métallurgique bien connu utilisé dans de nombreuses applications telles que panneaux architecturaux, passerelles et passages pour piétons, escaliers, grillages, clôtures, éléments de sécurité et renforcement, etc. C'est un produit durable, bon marché, facile à manipuler, se présentant sous de nombreuses formes et dans de nombreuses compositions métalliques, notamment des nuances d'acier variées, etc. Il est réalisé par passage d'une feuille métallique dans une presse où sont réalisées, par découpe, des fentes transverses qui sont étirées pendant la découpe.

Outre les feuilles de métal déployé, on peut bien entendu utiliser des feuilles de métal perforées qui auraient un comportement similaire à celui d'une feuille de métal déployé ou tout autre matériau métallique composé d'une pluralité de brins interconnectés pour former des mailles comme par exemple des feuilles sous la forme de treillis ou de grilles.

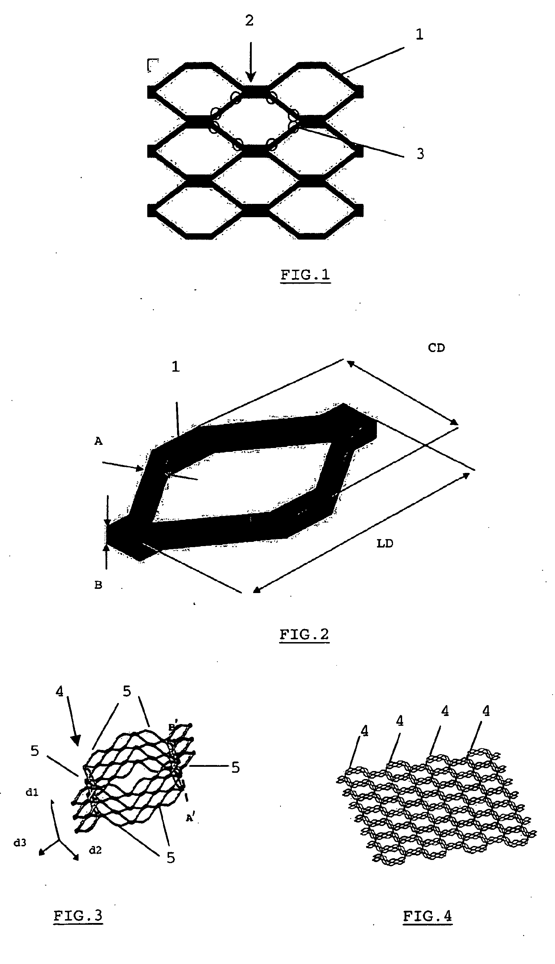

La géométrie des mailles de la feuille métallique est variable. En effet, le déploiement d'une feuille métallique, ou la perforation d'une feuille métallique permet de former des mailles présentant différentes géométries. Ainsi, les mailles pourront avoir la forme d'un carré, d'un rectangle, d'un losange, ou encore d'un hexagone. Les paramètres d'une maille hexagonale d'une feuille métallique sont respectivement la "lanière" (A), l'épaisseur (B), la petite diagonale (CD), la grande diagonale (LD), ainsi que l'angle d'ouverture de la maille 1 (figure 2).

Les structures selon l'invention sont réalisées à partir de feuilles réalisées en aluminium, en acier au carbone ou en acier inoxydable. Dans le cas d'utilisation d'acier au carbone, celui-ci est de préférence revêtu par un revêtement métallique et/ou par un revêtement organique tel qu'une peinture qui permettent d'assurer une bonne protection contre la corrosion de l'acier. Les revêtements métalliques sont choisis parmi les revêtements de zinc, d'aluminium, de cuivre ou encore un de leurs alliages.

La structure selon l'invention peut être réalisée en utilisant des feuilles de métal déployé, des feuilles perforées, des feuilles sous la forme de treillis ou de grilles en acier déjà pré-revêtus d'un revêtement métallique et/ou organique avant l'assemblage des feuilles. Cependant, pour assurer une meilleure tenue à la corrosion de la structure, il est préférable de procéder au revêtement de celle-ci lorsque le formage et l'assemblage des différentes feuilles entre elles ont été réalisés. Ainsi, par exemple, il est possible de plonger directement la structure dans un bain de galvanisation ou un bain d'électrozingage pour la revêtir d'un revêtement de zinc ou d'alliage de zinc. Cette dernière solution est plus avantageuse à cet égard, du fait que les feuilles d'acier prérevêtu ne sont pas protégées sur leur tranche.

Le but recherché en utilisant une feuille de métal déployé ou perforé, ou encore sous la forme de treillis ou de grille est d'abord d'obtenir des mailles, par exemple hexagonales (2D) comme représenté dans le mode de réalisation de l'invention de la figure 1, qui pourront « se refermer » sur elles-mêmes par réalisation de rotules plastiques 3 lors d'un choc.

Le principe général à la base de l'invention est donc de refermer au moins partiellement chacune des mailles 1 subissant un choc, en créant des rotules plastiques 3 qui dissipent l'énergie lors du choc.

On notera que, si la structure est étirée plutôt que comprimée, les rotules 3 se forment également aux mêmes endroits. L'absorption d'énergie peut donc être réalisée également en étirant globalement la structure. Il existe notamment des applications où une structure montée sous le sol subit une expansion lors d'un choc. Cependant, dans la plupart des applications, la structure sera écrasée.

On distingue deux types de feuilles de métal déployé : le type aplati et le type non aplati. La feuille de métal déployé est dite aplatie lorsqu'elle subit une opération de laminage après le déploiement de la feuille métallique. La structure absorbante peut être réalisée avec les deux types de feuilles de métal déployé. La feuille de métal déployé aplatie présente l'avantage d'être plus facile à assembler alors que la feuille de métal déployé non aplatie est plus rigide et donc plus stable.

Pour que les mailles puissent se refermer correctement, il faut assurer une certaine stabilité à la feuille de métal déployé, perforée ou sous forme de treillis ou de grille. Le fait de former une structure en trois dimensions, dite « macro-cellulaire », constituées de macro-cellules 4, telle que représentée sur la figure 4, assure cette fonction. En effet, la feuille est rigidifiée par la réalisation de plis de profilage ou des cintrages lors de sa mise en forme. Dans la forme d'exécution particulière représentée sur la figure 3, la macro-cellule 4 a essentiellement la forme d'un prisme à base hexagonale, présentant six faces latérales 5 constituées à partir de feuilles de métal déployé, chaque face 5 étant constituée soit de 1, soit de 2 mailles dans le sens de la largeur de la macro-cellule. Les faces sont obtenues par formage d'une feuille de métal déployé, d'une feuille métallique perforée ou encore d'une feuille métallique sous forme de treillis ou de grille par exemple par pliage, profilage en « U », en triangle, etc., ou encore par cintrage. En se référent à la macro-cellule 4 représentée sur la figure 3, on peut considérer que les faces latérales 5 sont « fermées », alors que les bases du prisme sont totalement ouvertes, n'étant pas « fermées » par une face physique en métal déployé.

En répétant cette macro-cellule régulièrement, sous forme d'un réseau, on obtient une structure ressemblant à une mousse métallique (figure 4).

### 2. Géométrie des macro-cellules

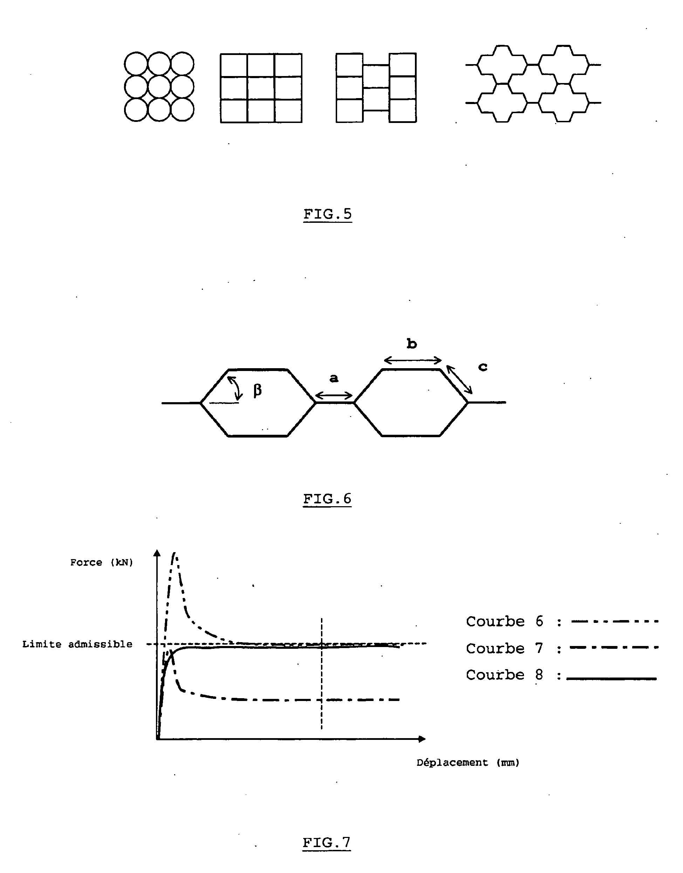

La mise en forme de la feuille métallique représentée sur la figure 3 est telle qu'on obtient une feuille présentant une section en forme d'hexagone mais d'autres formes peuvent être mises en oeuvre. On peut par exemple mettre en oeuvre les formes décrites sur la figure 5.

D'autres mises en forme encore telles que formation de sections selon des triangles, losanges, carrés, polygones quelconques (avec des feuilles profilées), ellipses ou sinusoïdes (avec des feuilles cintrées) sont possibles. On peut aussi mettre en oeuvre une forme complexe qui serait composée de plusieurs des formes de base citées ci dessus. Les macro-cellules 4 peuvent avoir alors en trois dimensions la forme de sphères, cubes, pyramides, polyèdres, cylindres, etc., selon que les feuilles sont pliées (profilage) ou ondulées (cintrage).

Plusieurs paramètres interviennent dans une telle géométrie, comme représenté schématiquement sur la figure 6 :
- β : angle de pliage ;
- a, b, c : longueurs entre plis.
   Tous ces paramètres ont une influence sur le comportement de la structure lorsqu'elle est écrasée. Ce comportement dépend également des paramètres additionnels suivants :

- géométrie de la maille qui se referme (feuille de métal déployé ou perforé, sous forme de grilles ou de treillis) ;
- nombre de feuilles assemblées ;
- nombre de macro-cellules formées ;
- longueur ou plus généralement dimensions de la structure.

Les plis seront de préférence réalisés entre deux mailles 1 (c'est-à-dire au niveau d'un noeud 2) pour des raisons de facilité de fabrication et pour permettre une meilleure déformation de la maille lorsqu'elle se referme. Cependant, on pourrait réaliser le pli à n'importe quelle position entre deux noeuds 2 (figure 1).

Le comportement de la structure selon l'invention est variable selon la direction d'impact. Pour comprendre comment la structure selon l'invention réagit et se déforme aux impacts, on va se référer à la figure 3.

L'absorption d'énergie est optimale lorsque la structure est écrasée suivant la direction d1. La majorité des mailles touchées par le choc se referment alors entièrement ou partiellement selon l'intensité du choc. Cependant, lors de certains essais, on a pu remarquer que, si le nombre de mailles entre deux plis est supérieur à 20, les mailles peuvent ne pas se refermer correctement. Dans ces conditions, certaines feuilles dans la structure forment des ondulations qui dissipent également de l'énergie, mais de manière moins efficace que lorsque les mailles se referme correctement.

Lors d'un impact dans la direction d1 en combinaison avec une autre direction, la structure dissipe de l'énergie mais de manière moins efficace que lorsque l'impact est dans la direction d1. Les mailles se referment partiellement, mais de manière moins homogène que lors d'un impact dans la direction d1. Dans les deux cas, il y a effondrement au moins partiel de la macro-cellule sur elle-même : son « volume » se réduit.

En outre, dans le cas où la maille présente une forme hexagonale, ou encore une forme de losange et pour un comportement optimal de la structure d'absorption selon l'invention, il est préférable de disposer la grande diagonale des mailles de métal déployé perpendiculairement à la direction d1, donc tel que représenté sur la figure 3. Cependant, dans une forme d'exécution alternative, la petite diagonale des mailles peut être perpendiculaire à cette direction d1, et dans ce cas la dissipation d'énergie est moindre.

La structure absorbe également une certaine quantité d'énergie si elle est écrasée suivant les deux autres directions (d2, d3), ou encore une combinaison de ces deux directions. Dans ce cas, la déformation plastique n'est pas exactement identique. La déformation se situe dans les plis de jonction des faces 5 de la macro-cellule 4 et les mailles d'une même face 5 ne se referment pas, tout en participant au repliement d'ensemble de ladite face 5. En outre, certaines faces 5 des macro-cellules 4 s'effondrent sur elles-mêmes, ce qui les rapproche les unes vers les autres. Bien que la structure soit moins bien conçue pour ce type d'écrasement, on peut envisager qu'elle soit soumise également à ce type de sollicitation.

### 3. Contrainte d'écrasement

Pour les applications liées à la sécurité des personnes lors d'un accident de circulation, un des points importants à considérer lors de l'absorption d'énergie est la suppression ou la diminution du pic de choc. En garantissant une force d'écrasement constante, c'est-à-dire directement proportionnelle à la décélération ressentie par l'occupant du véhicule, on garantit à la fois la sécurité de l'occupant et une efficacité d'absorption maximale de la structure.

Si le pic de choc est supérieur à la limite autorisée (figure 7 - courbe 6), la sécurité n'est pas garantie.

Si le pic de choc est inférieur à la limite autorisée (figure 7 - courbe 7), la sécurité est garantie mais l'énergie absorbée, c'est-à-dire l'aire sous la courbe, n'est pas maximale pour un déplacement donné "d".

Le meilleur cas de figure est donc d'avoir un système dont la force d'écrasement est constante et égale à la limite admissible (figure 7 - courbe 8). La sécurité est alors garantie et l'énergie absorbée est maximale pour un déplacement minimal.

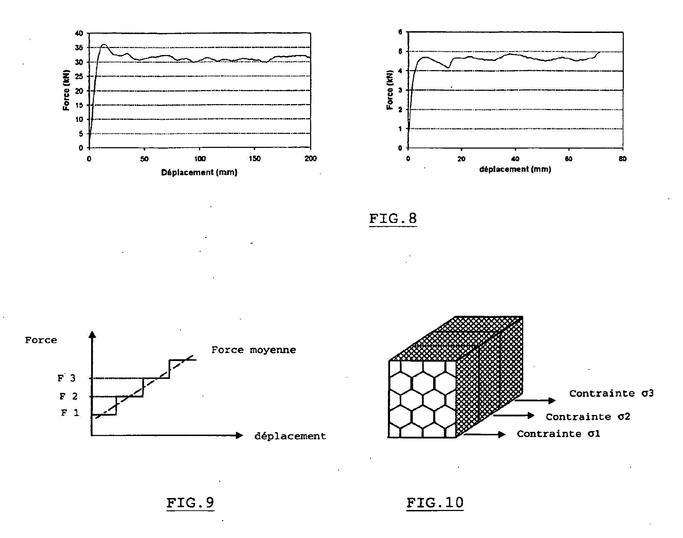

Un des avantages de la structure d'absorption selon l'invention est qu'elle permet d'obtenir un tel écrasement sous force constante. La figure 8 montre le résultat de deux essais effectué sur deux structures différentes, réalisées à partir de feuilles de métal déployé mais comportant toutes deux 4 macro-cellules en prisme hexagonal dans la direction d1. Ces deux structure ont subit un impact dans la direction d1. On voit clairement sur ce graphique que la force d'écrasement est sensiblement constante, et que la structure selon l'invention ne présente pas de pic de choc.

Dans le cas ou l'on désire obtenir une contrainte variable, il suffit de disposer plusieurs structures individuelles, l'une à la suite de l'autre dans la direction d'impact ou d'écrasement, ayant chacune une contrainte d'écrasement différente de la précédente. On peut alors former un système comprenant un empilement de structures individuelles qui s'écrase avec une contrainte croissante par palliers à mesure que l'on s'éloigne de la surface d'impact initiale (figures 9 et 10). L'absence de pic de choc est à nouveau primordiale dans ce cas de figure.

### 4. Caractéristiques anti-voilement de l'invention

En fonction du choix de la maille de métal déployé et de la géométrie de la mise en forme de la feuille, on peut être confronté à un problème de voilement ou de flambement de la structure.

Pour empêcher ce flambement, plusieurs solutions sont proposées.

### a) mise en forme (cellule 3D) et choix de la feuille métallique

La formation de macro-cellule en 3D permet de donner une stabilité à la feuille de métal déployé, à la feuille perforée ou encore à la feuille sous forme de treillis ou de grille et lui permet de mieux se comporter lors de l'écrasement. La géométrie de la macro-cellule 3D et sa taille ont une grande influence sur son comportement lors de l'écrasement. Par exemple, dans le cas de faces planes, l'écrasement est d'autant meilleur que le nombre de mailles entre deux plis est petit, c'est à dire typiquement inférieur à à 20 mailles

### b) plis locaux

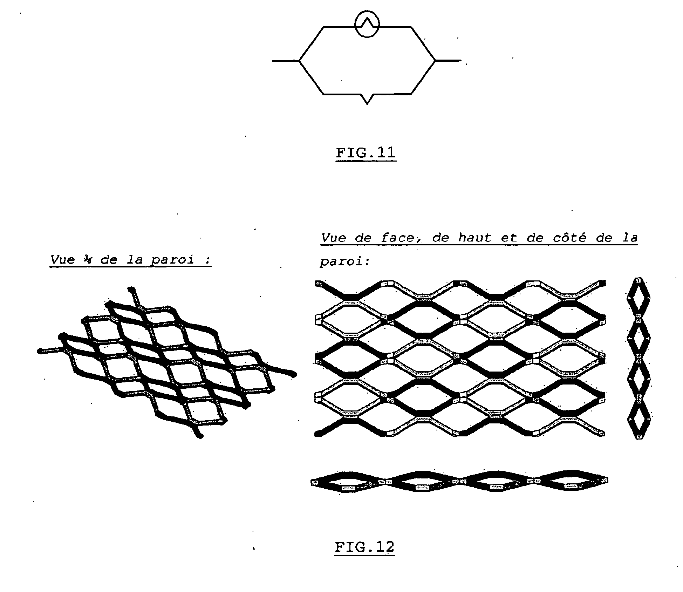

Pour éviter le phénomène de flambement, on peut également renforcer la structure par des petits plis localisés qui rigidifient davantage les faces (figure 12).

### c) doublement de l'épaisseur des lanières

L'augmentation de l'épaisseur par rapport à la longueur de la lanière diminue le problème de voilement. Pour augmenter cette épaisseur, on peut :
- soit directement fabriquer une feuille de métal déployé possédant ces caractéristiques ; cependant à partir d'une certaine épaisseur de feuille, le déploiement du métal devient difficile ;
- soit par exemple utiliser deux feuilles de métal déployé superposées pour réaliser les faces de macro-cellules.
Dans le cas d'une feuille métallique perforée, il suffit d'augmenter l'épaisseur de la feuille de base.

### d) mousse macro-cellulaire

Comme on l'a indiqué précédemment, on obtient la mousse macro-cellulaire en assemblant un nombre important de macro-cellules entre elles (figure 4). La présence de toutes ces macro-cellules est en soi défavorable au voilement et au flambement des parois. Elles sont maintenues solidaires, ce qui diminue les problèmes d'instabilité.

### e) réalisation d'une pré-déformation hors du plan de la feuille (figure 12)

Une telle pré-déformation de la feuille métallique permettra à la maille de bien se refermer en étant moins soumise au phénomène de l'allongement de la maille pendant son écrasement. Cet allongement amplifie le voilement des mailles hors du plan. En créant des déformations préalables, de manière telle que les mailles soient situées alternativement de part et d'autre du plan de la feuille de métal déployé, perforée, sous forme de treillis ou de grille (plan de la face), on empêche la sortie de plusieurs mailles du même côté du plan. Ainsi, la face reste stable.

Il est bien clair que cette feuille mise en forme une première fois pour former une feuille pré-déformée, subira une seconde mise en forme pour former des macro-cellules comme expliqué précédemment. D'autre part, dans un mode de réalisation particulier de l'invention, ces pré-déformations ne sont réalisées que sur certaines feuilles ou faces.

### 5. Procédé de fabrication

Le procédé de fabrication d'une structure pour absorber l'énergie lors d'un choc selon l'invention, comprend au moins les étapes suivantes :
- sélectionner une pluralité de feuilles de métal déployé, de feuilles métalliques perforées, ou de feuilles métallique sous forme de treillis ou sous forme de grilles ;
- effectuer une pré-déformation éventuelle desdites feuilles de manière à disposer les mailles d'au moins une feuille alternativement de part et d'autre du plan de ladite feuille, de manière à renforcer la stabilité ou la rigidité finale de la structure ;
- effectuer une mise en forme desdites feuilles, éventuellement pré-déformées, par pliage, par profilage, par cintrage ou par emboutissage, ainsi qu'un positionnement desdites feuilles mises en formes de manière à préparer la structure sous la forme de macro-cellules ;
- assembler lesdites feuilles mises en forme et positionnées pour obtenir la structure finale.

Des procédés d'assemblage possibles sont : soudage par résistance, soudage laser, coupe et rabattage ou ligaturage de brins, sertissage, clinchage, ligaturage par fils. On peut également utiliser le brasage dans le cas où l'on utilise de l'acier pré-revêtu d'un revêtement métallique tel que le zinc, l'aluminium ou un de leurs alliages.

## Revendications

1. Structure pour absorber l'énergie lors d'un choc, par déformation plastique, comprenant un agencement d'une pluralité de feuilles métalliques déformées, lesdites feuilles étant constituées d'une pluralité de brins interconnectés définissant des mailles (1), la matière métallique se présentant sous la forme de lanières essentiellement attachées au niveau de sommets de chaque maille (1), appelés noeuds (2), **caractérisée en ce que** lesdites feuilles métalliques mises en forme et agencées réalisent un réseau régulier de macro-cellules (4), délimitées au moins partiellement par des faces (5), lesdites macro-cellules (4) étant configurées pour permettre à au moins une desdites mailles (1) de se refermer au moins partiellement sur elle-même et/ou à au moins une desdites faces (5) de se rapprocher au moins partiellement d'une ou plusieurs autres faces (5), lors de ladite déformation plastique.

2. Structure selon la revendication 1, **caractérisée en ce qu'**une dimension caractéristique des macro-cellules (4) est comprise entre 0,5 et 15 cm.

3. Structure selon la revendication 2, **caractérisée en ce que** la dimension caractéristique des macro-cellules (4) est comprise entre 1 et 10 cm.

4. Structure selon l'une quelconque des revendications 1 à 3, **caractérisée en ce que** la fermeture d'au moins une desdites mailles (1) sur elle-même et/ou le rapprochement d'au moins une desdites faces (5) avec une ou plusieurs autres faces d'une macro-cellule (4) sont réalisés lors d'un choc par pliage des feuilles en une pluralité de points, appelés rotules plastiques (3).

5. Structure selon l'une quelconque des revendications 1 à 4, **caractérisée en ce que** chaque macro-cellule (4) a la forme d'une sphère comprenant un ou plusieurs orifices sur une circonférence quelconque.

6. Structure selon l'une quelconque des revendications 1 à 4, **caractérisée en ce que** chaque macro-cellule (4) a la forme d'un cube, d'un prisme, d'une pyramide ou plus généralement d'un polyèdre, réalisés par pliage des feuilles et dont chaque face comprend un ou plusieurs orifices.

7. Structure selon l'une quelconque des revendications 1 à 4, **caractérisée en ce que** chaque macro-cellule (4) comprend des faces (5) ondulées, réalisées par cintrage ou profilage des feuilles, chaque face (5) comprenant un ou plusieurs orifices.

8. Structure selon l'une quelconque des revendications 1 à 4, **caractérisée en ce qu'**elle comprend une combinaison de macro-cellules (4) de formes distinctes.

9. Structure selon l'une quelconque des revendications précédentes, **caractérisée en ce que** les feuilles métalliques sont choisies parmi le groupe comprenant des feuilles de métal déployé, des feuilles sous la forme de treillis ou de grille et des feuilles perforées.

10. Structure selon l'une quelconque des revendications précédentes, **caractérisée en ce que** les mailles (1) sont soit hexagonales, soit en forme de losange, soit carrées.

11. Structure selon la revendication 9 ou 10, **caractérisée en ce que** ladite feuille de métal déployé est aplatie.

12. Structure selon la revendication 9 ou 10, **caractérisée en ce que** ladite feuille de métal déployé est non aplatie.

13. Structure selon l'une quelconque des revendications 9 à 12, **caractérisée en ce qu'**elle est réalisée à partir d'une pluralité de feuilles de métal déployé superposées.

14. Structure selon l'une quelconque des revendications 1 à 13, **caractérisée en ce qu'**elle comporte des plis locaux, non situés à l'emplacement des noeuds (2), pour rigidifier la structure.

15. Structure selon l'une quelconque des revendications 1 à 14, **caractérisée en ce qu'**au moins une des feuilles métalliques utilisées est au moins en partie pré-déformée de manière telle que les mailles (1) soient situées alternativement de part et d'autre du plan de ladite feuille.

16. Structure selon l'une quelconque des revendications 9 à 15, **caractérisée en ce que**, lorsque les mailles de ladite feuille métallique ont la forme d'un losange ou d'un hexagone, les macro-cellules (4) sont orientées pour maximiser le nombre de mailles (1) de métal déployé parallèles à la direction d'impact prévue et dont la grande diagonale est essentiellement perpendiculaire à cette dernière.

17. Structure selon l'une quelconque des revendications 1 à 16, **caractérisée en ce qu'**elle est conformée pour présenter une surface d'impact variable selon la direction d'écrasement.

18. Structure selon l'une quelconque des revendications 9 à 17, **caractérisée en ce que** les feuilles métalliques de métal déployé, les feuilles métalliques perforées, et les feuilles métalliques sous forme de treillis ou de grille sont réalisées en aluminium, en acier au carbone ou en acier inoxydable.

19. Structure selon la revendication 18, **caractérisée en ce que** l'acier au carbone est revêtu par un revêtement métallique choisi parmi le zinc, l'aluminium, le cuivre ou un de leurs alliages et/ou par un revêtement organique.

20. Procédé de fabrication d'une structure pour absorber l'énergie lors d'un choc selon l'une quelconque des revendications 1 à 19, **caractérisé** au moins par les étapes suivantes :
- on sélectionne une pluralité de feuilles métalliques, de métal déployé, perforées, ou sous la forme d'un treillis ou sous la forme de grille ;
- on effectue une pré-déformation éventuelle desdites feuilles de manière à disposer les mailles d'au moins une feuille alternativement de part et d'autre du plan de ladite feuille, de manière à renforcer la stabilité ou la rigidité finale de la structure ;
- on effectue une mise en forme desdites feuilles éventuellement pré-déformées ainsi qu'un positionnement desdites feuilles mises en forme de manière à préparer la structure sous la forme de macro-cellules ;
- on assemble lesdites feuilles mises en formes et positionnées pour obtenir la structure finale.

21. Procédé de fabrication selon la revendication 20, **caractérisé en ce que** ledit assemblage est réalisé par soudage par résistance, soudage laser, coupe et rabattage ou ligaturage de brins, sertissage, clinchage ou ligaturage par fils, ou encore par brasage si on utilise de l'acier revêtu par un revêtement métallique de zinc, d'aluminium ou un de leurs alliages.

22. Procédé de fabrication selon l'une quelconque des revendications 20 ou 21, **caractérisé en ce que** la mise en forme de ladite feuille éventuellement pré-déformée est réalisée par pliage, par profilage, par cintrage ou par emboutissage.

23. Procédé de fabrication selon l'une quelconque des revendications 20 à 22, **caractérisé en ce que** la pré-déformation de ladite feuille est réalisée par pliage, par profilage, par cintrage ou par emboutissage.

24. Structure composite comprenant un empilement, selon une direction d'impact ou direction d'écrasement, de structures individuelles selon l'une quelconque des revendications 1 à 19, chacune desdites structures individuelles étant conformée pour présenter une contrainte d'écrasement différente de la précédente dans la pile.

25. Structure composite selon la revendication 24, **caractérisée en ce que** la contrainte d'écrasement est croissante à mesure que l'on s'éloigne d'une surface d'impact initiale.

26. Procédé de fabrication de la structure composite selon la revendication 24 ou 25, **caractérisée en ce qu'**on réalise un assemblage de structures d'absorption, selon l'une quelconque des revendications 1 à 19, présentant des contraintes d'écrasement différentes.

27. Utilisation de la structure selon l'une quelconque des revendications 1 à 19 ou 24 à 25, comme protection fixe montée aux abords des péages et des carrefours routiers, comme protection de piles de pont ou comme protection fixée sur des véhicules terrestres à moteur, tels que des camions ou des véhicules d'intervention routière.

## Claims

1. Structure for absorbing, by plastic deformation, energy during an impact, comprising an arrangement of a plurality of deformed metal sheets consisting of a plurality of interconnected strands which define meshes (1), the metallic material being in the form of strips attached approximately at the vertices, known as nodes (2), of each mesh (1), **characterized in that** when the said metal sheets have been formed and arranged, they create a regular network of macrocells (4) bounded at least partially by faces (5), the said macrocells (4) being configured such that at least one of the said meshes (1) is able to close up on itself at least partially and/or such that at least one of the said faces (5) is able to move closer at least partially to one or more of the other faces (5) during the said plastic deformation.

2. Structure according to Claim 1, **characterized in that** the macrocells (4) have a characteristic dimension of between 0.5 and 15 cm.

3. Structure according to Claim 2, **characterized in that** the characteristic dimension of the macrocells (4) is between 1 and 10 cm.

4. Structure according to any one of Claims 1 to 3, **characterized in that** at least one of the said meshes (1) closes up on itself and/or at least one of the said faces (5) moves closer to one or more of the other faces of a macrocell (4) during an impact by the sheets folding at a plurality of points known as plastic ball joints (3).

5. Structure according to any one of Claims 1 to 4, **characterized in that** each macrocell (4) is in the form of a sphere having one or more orifices on any circumference.

6. Structure according to any one of Claims 1 to 4, **characterized in that** each macrocell (4) is in the form of a cube, a prism, a pyramid or more generally a polyhedron, which is created by folding the sheets and each face of which has one or more orifices.

7. Structure according to any one of Claims 1 to 4, **characterized in that** each macrocell (4) has curved faces (5) which are created by bending or profiling the sheets, each face (5) having one or more orifices.

8. Structure according to any one of Claims 1 to 4, **characterized in that** it comprises a combination of macrocells (4) having different forms.

9. Structure according to any one of the preceding claims, **characterized in that** the metal sheets are chosen from the group consisting of sheets of expanded metal, sheets in the form of a lattice or grid, and perforated sheets.

10. Structure according to any one of the preceding claims, **characterized in that** the meshes (1) are either hexagonal, diamond-shaped or square.

11. Structure according to Claim 9 or 10, **characterized in that** the said sheet of expanded metal is flattened.

12. Structure according to Claim 9 or 10, **characterized in that** the said sheet of expanded metal is non-flattened.

13. Structure according to any one of Claims 9 to 12, **characterized in that** it is made from a plurality of superposed sheets of expanded metal.

14. Structure according to any one of Claims 1 to 13, **characterized in that** it has local folds, which are not at the same location as the nodes (2), in order to stiffen the structure.

15. Structure according to any one of Claims 1 to 14, **characterized in that** at least one of the metal sheets used is at least partly predeformed such that the meshes (1) lie alternately on either side of the plane of the said sheet.

16. Structure according to any one of Claims 9 to 15, **characterized in that** when the meshes of the said metal sheet are diamond-shaped or hexagonal, the macrocells (4) are oriented so as to maximize the number of meshes (1) of expanded metal parallel to the anticipated direction of impact, the long diagonal of which meshes is approximately perpendicular to this direction.

17. Structure according to any one of Claims 1 to 16, **characterized in that** it is shaped so as to have a variable impact area in the crushing direction.

18. Structure according to any one of Claims 9 to 17, **characterized in that** the metal sheets made of expanded metal, the perforated metal sheets and the metal sheets in the form of a lattice or grid are made of aluminium, carbon steel or stainless steel.

19. Structure according to Claim 18, **characterized in that** the carbon steel is coated with a metallic coating chosen from zinc, aluminium, copper or an alloy of these and/or with an organic coating.

20. Method for manufacturing a structure for absorbing energy during an impact according to any one of Claims 1 to 19, **characterized at least by** the following steps:
- a plurality of metal sheets, which are made of expanded metal, are perforated or are in the form of a lattice or in the form of a grid, are selected;
- the said sheets are optionally predeformed so as to arrange the meshes of at least one sheet alternating on either side of the plane of the said sheet, so as to increase the stability or the final rigidity of the structure;
- the said optionally predeformed sheets are formed and the said formed sheets are positioned so as to prepare the structure in the form of macrocells;
- the said formed and positioned sheets are assembled to provide the final structure.

21. Manufacturing method according to Claim 20, **characterized in that** the said assembly is carried out by resistance welding, laser welding, cutting and folding-over or tying-in of strands, wire crimping, clinching or tying-in, or else by brazing if steel coated with a metallic coating of zinc, aluminium or an alloy of these is used.

22. Manufacturing method according to either of Claims 20 and 21, **characterized in that** the said optionally predeformed sheet is formed by folding, profiling, bending or stamping.

23. Manufacturing method according to any one of Claims 20 to 22, **characterized in that** the said sheet is predeformed by folding, profiling, bending or stamping.

24. Composite structure comprising a stack, in an impact direction or a crushing direction, of individual structures according to any one of Claims 1 to 19, each of the said individual structures being shaped so as to have a different crush strength from the preceding structure in the stack.

25. Composite structure according to Claim 24, **characterized in that** the crush strength increases with increasing distance from an initial impact area.

26. Method for manufacturing the composite structure according to Claim 24 or 25, **characterized in that** absorption structures according to any one of Claims 1 to 19 and having different crush strengthes are assembled.

27. Use of the structure according to any one of Claims 1 to 19 or 24 to 25 as a fixed protective system mounted at the approaches to motorway tolls and at crossroads, as a protection for bridge piers or as a protective system fitted onto land motor vehicles such as lorries or roadside assistance vehicles.

## Patentansprüche

1. Struktur zum Absorbieren der Energie bei einem Stoß mittels plastischer Verformung, wobei die Struktur eine Anordnung mehrerer verformter Metallfolien umfasst, wobei die Folien aus mehreren vernetzten Strängen bestehen, die Maschen (1) definieren, wobei das Metallmaterial die Form von Riemen aufweist, die im Wesentlichen auf Höhe von Knotenpunkten jeder Masche (1), die Verknüpfungspunkte (2) genannt werden, angebracht sind, **dadurch gekennzeichnet, dass** die Metallfolien geformt und angeordnet werden, wobei ein gleichmäßiges Netz von Makrozellen (4) hergestellt wird, die zumindest zum Teil von Seiten (5) eingegrenzt werden, wobei die Makrozellen (4) so konfiguriert sind, dass sie ermöglichen, dass bei der plastischen Verformung mindestens eine der Maschen (1) sich zumindest zum Teil auf sich selbst wieder schließt und/oder mindestens eine der Seiten (5) sich zumindest zum Teil einer oder mehreren anderen Seiten (5) annähert.

2. Struktur nach Anspruch 1, **dadurch gekennzeichnet, dass** eine für Makrozellen (4) charakteristische Abmessung zwischen 0,5 und 15 cm liegt.

3. Struktur nach Anspruch 2, **dadurch gekennzeichnet, dass** die für Makrozellen (4) charakteristische Abmessung zwischen 1 und 10 cm liegt.

4. Struktur nach einem der Ansprüche 1 bis 3, **dadurch gekennzeichnet, dass** das Schließen von mindestens einer der Maschen (1) auf sich selbst und/oder die Annäherung von mindestens einer der Seiten (5) mit einer oder mehreren Seiten einer Makrozelle (4) bei einem Stoß durch Falzen von Folien an mehreren Punkten, die plastische Kugelgelenke (3) genannt werden, umgesetzt wird.

5. Struktur nach einem der Ansprüche 1 bis 4, **dadurch gekennzeichnet, dass** jede Makrozelle (4) die Form einer Kugel aufweist, die eine oder mehrere Öffnungen auf einem beliebigen Umfang umfasst.

6. Struktur nach einem der Ansprüche 1 bis 4, **dadurch gekennzeichnet, dass** jede Makrozelle (4) die Form eines Kubus, eines Prismas, einer Pyramide oder allgemeiner eines Polyeders aufweist, die durch Falzen von Folien hergestellt werden und bei denen jede Seite eine oder mehrere Öffnungen umfasst.

7. Struktur nach einem der Ansprüche 1 bis 4, **dadurch gekennzeichnet, dass** jede Makrozelle (4) wellenförmige Seiten (5) umfasst, die durch Biegen oder Profilieren von Folien hergestellt werden, wobei jede Seite (5) eine oder mehrere Öffnungen umfasst.

8. Struktur nach einem der Ansprüche 1 bis 4, **dadurch gekennzeichnet, dass** sie eine Kombination von Makrozellen (4) mit unterschiedlichen Formen umfasst.

9. Struktur nach einem der vorhergehenden Ansprüche, **dadurch gekennzeichnet, dass** die Metallfolien aus der Gruppe ausgewählt sind, die Streckmetallfolien, Folien in der Form eines Geflechts oder Gitters und perforierte Folien umfasst.

10. Struktur nach einem der vorhergehenden Ansprüche, **dadurch gekennzeichnet, dass** die Maschen (1) sechseckig sind, in der Form einer Raute sind, viereckig sind.

11. Struktur nach Anspruch 9 oder 10, **dadurch gekennzeichnet, dass** die Streckmetallfolie abgeplattet ist.

12. Struktur nach Anspruch 9 oder 10, **dadurch gekennzeichnet, dass** die Streckmetallfolie nicht abgeplattet ist.

13. Struktur nach einem der Ansprüche 9 bis 12, **dadurch gekennzeichnet, dass** sie aus mehreren aufeinander gelegten Streckmetallfolien hergestellt ist.

14. Struktur nach einem der Ansprüche 1 bis 13, **dadurch gekennzeichnet, dass** sie lokale Knicke enthält, die sich nicht auf der Stelle von Verknüpfungspunkten (2) befinden, um die Struktur zu versteifen.

15. Struktur nach einem der Ansprüche 1 bis 14, **dadurch gekennzeichnet, dass** mindestens eine der eingesetzten Metallfolien zumindest zum Teil derart vorverformt ist, dass die Maschen (1) sich abwechselnd auf beiden Seiten der Fläche der Folie befinden.

16. Struktur nach einem der Ansprüche 9 bis 15, **dadurch gekennzeichnet, dass**, wenn die Maschen der Metallfolie in der Form einer Raute oder eines Sechsecks sind, die Makrozellen (4) so ausgerichtet sind, dass sie die Anzahl an Maschen (1) aus Streckmetall maximieren, die zu der Richtung eines vorgesehenen Schlags parallel sind und deren große Diagonale im Wesentlichen zu dieser letzteren senkrecht ist.

17. Struktur nach einem der Ansprüche 1 bis 16, **dadurch gekennzeichnet, dass** sie so angepasst ist, dass sie eine Schlagoberfläche aufweist, die gemäß der Zerquetschungsrichtung veränderlich ist.

18. Struktur nach einem der Ansprüche 9 bis 17, **dadurch gekennzeichnet, dass** die Metallfolien aus Streckmetall, die perforierten Metallfolien und die Metallformen in der Form eines Geflechts oder Gitters aus Aluminium, aus unlegiertem Stahl oder aus nicht rostendem Stahl hergestellt sind.

19. Struktur nach Anspruch 18, **dadurch gekennzeichnet, dass** der unlegierte Stahl mit einem Metallüberzug, der aus Zink, Aluminium, Kupfer oder einer der Legierungen dieser ausgewählt ist, und/oder mit einem organischen Überzug überzogen ist.

20. Verfahren zur Herstellung einer Struktur zum Absorbieren der Energie bei einem Stoß nach einem der Ansprüche 1 bis 19, **gekennzeichnet durch** zumindest die folgenden Schritte:
- Wählen mehrerer Metallfolien aus Streckmetall, perforiert oder in der Form eines Geflechts oder in der Form eines Gitters;
- Vornehmen einer eventuellen Vorverformung der Folien, so dass die Maschen mindestens einer Folie abwechselnd auf beiden Seiten der Fläche der Folie angeordnet werden, so dass die Endstabilität oder -steifheit der Struktur verstärkt wird;
- Vornehmen einer Formung der eventuell vorverformten Folien sowie einer Positionierung der geformten Folien, so dass die Struktur in der Form von Makrozellen hergerichtet wird;
- Verbinden der geformten und positionierten Folien, um die endgültige Struktur zu erhalten.

21. Herstellungsverfahren nach Anspruch 20, **dadurch gekennzeichnet, dass** der Verbund durch Widerstandsschweißen, Laserstrahlschweißen, Zuschneiden und Umschlagen oder Zusammenbinden von Strängen, Bördeln, Clinchen oder Zusammenbinden mittels Drähten oder außerdem durch Löten hergestellt wird, wobei Stahl verwendet wird, der mit einem Metallüberzug aus Zink, Aluminium oder einer der Legierungen dieser überzogen ist.

22. Herstellungsverfahren nach einem der Ansprüche 20 oder 21, **dadurch gekennzeichnet, dass** die Formung der eventuell vorverformten Folie durch Falzen, durch Profilieren, durch Biegen oder durch Tiefziehen umgesetzt wird.

23. Herstellungsverfahren nach einem der Ansprüche 20 bis 22, **dadurch gekennzeichnet, dass** die Vorverformung der Folie durch Falzen, durch Profilieren, durch Biegen oder durch Tiefziehen umgesetzt wird.

24. Verbundstruktur, die eine Stapelung gemäß einer Schlagrichtung oder Zerquetschungsrichtung von individuellen Strukturen nach einem der Ansprüche 1 bis 19 umfasst, wobei jede der individuellen Strukturen so angepasst ist, dass sie eine Zerquetschungseinschränkung aufweist, die sich von der vorherigen in dem Stapel unterscheidet.

25. Verbundstruktur nach Anspruch 24, **dadurch gekennzeichnet, dass** die Zerquetschungseinschränkung vom Maß her zunimmt, desto mehr sie von der anfänglichen Schlagoberfläche absteht.

26. Verfahren zur Herstellung der Verbundstruktur nach Anspruch 24 oder 25, **dadurch gekennzeichnet, dass** ein Verbund von Absorptionsstrukturen nach einem der Ansprüche 1 bis 19 hergestellt wird, die unterschiedliche Zerquetschungseinschränkungen aufweisen.

27. Verwendung der Struktur nach einem der Ansprüche 1 bis 19 oder 24 bis 25 als montierte stationäre Schutzvorrichtung an Mautstellenvorgeländen und Straßenkreuzungen, als Schutzvorrichtung für Brückenpfeiler oder als an Landmotorfahrzeugen, wie Lastwagen oder Straßeneinsatzfahrzeugen, angebrachte Schutzvorrichtung.
